# EUROPEAN PATENT APPLICATION

(11) **EP 4 804 570 A2**
(43) Date of publication of application: **09.09.2026**
(21) Application number: 26187013.3
(22) Date of filing: 01.06.2023
(51) Int. Cl.: H04W 4/00

(54) **SYSTEM AND METHOD OF COMMUNICATION FOR SWARM MANAGEMENT AND COORDINATION**

(30) Priority: 03.06.2022 DE 102022205690
(62) Document number(s) of the earlier application(s) in accordance with Art. 76 EPC: 23730100.7 / 4 533 203
(71) Applicant: AUMOVIO Germany GmbH, 60488 Frankfurt am Main (DE)
(72) Inventor: Andrae, Andreas, 60488 Frankfurt am Main (DE); Gonzalez Gonzalez, David, 60488 Frankfurt am Main (DE); Gonsa, Osvaldo, 60488 Frankfurt am Main (DE)
(74) Representative: Aumovio Corporation

(57) **Abstract**

The present invention is related to a system for coordination and management of a swarm of automated entities, the swarm comprising at least a designated master and a slave. Each automated entity includes data processing means, namely at least one processor coupled with at least one memory and adapted to execute instructions that facilitate operations of program modules, and each automated entity has specific assets and abilities necessary to interoperate with other entities and perform a mission as swarm. A swarm management module is instantiated at the master, the swarm management module comprising a mission planning manager adapted to receive or load a mission and to provide a mission configuration. The designated swarm master is configured to announce itself over a communication module and a communication link, and to request at least one automated entity different from and external to the master to join in the performance of the mission as swarm slave.

There is provided also a method for coordination and management of a swarm of automated entities. The method comprises:
receiving, by the master, an indication of a mission assigned to the swarm, sending, by the master, a master announcing message, to at least one potential slave, reachable directly or indirectly over at least one communication link, the master announcing message including a mission type,
receiving, by all reachable potential slaves, the master announcing message to check if at least one potential slave has a profile that matches the mission type, the profile including assets and abilities matching the announced mission type,
sending in return, to the master, at least one swarm joining message, by at least one of the slaves that has a profile matching the announced mission type, directly or indirectly over the communication link.

## Description

The present invention relates to a communication method and system for coordination and management of a swarm of automated entities, concerning the field of connectivity of autonomous operated equipment.

Many industries (e.g., agriculture, construction, mining, logistics) see greater levels of autonomy as a means for improving operational efficiency, potentially also saving resources, such as energy, emissions, and personnel. This includes automated interactions between automated machinery/vehicles as well as their orchestration. Thus, connectivity is seen as key enabler for optimizing operational efficiency.

There are already existing connectivity solutions for off-highway use cases, where the corresponding solutions greatly differ with respect to application areas and requirements. For example, commercial solutions of swarms, cloud-controlled smart farming robots, e.g., Fendt's Xaver2, already exist, but are primarily coordinated via a central cloud platform, thus re-quiring cloud connectivity. Commercial solutions were also announced by Komatsu (V2V at mining), JCA (fleet management for autonomous machines), Rajant Technologies (the so-called "Kinetic Mesh" technology), Kinèis satellite connectivity solutions for IoT, SATEL, etc.

3GPP technical report TR 38.836 V17.0.0 (2021-03), TSG RAN WG2 specifies the results of its "Study on NR side-link relay" for 3GPP's Release 17, whereby a remote user equipment (UE) is either out-of-coverage or in a different cell coverage and a relay from user equipment to network (UE-NW) may assume an inter-working function as inter-cell relay. For Release 18, another scenario for UE-to-UE Relay will become relevant, where any vehicle with an on-board communication unit can be enabled to operate as a relay user equipment. NR sidelink is assumed on the direct interface (PC5) between the Remote UE(s) and the UE-to-UE Relay. Moreover, there is an active 5GAA work item on NR-V2X (T-210026) specifying "System Enablers & Best Practices for Next-Generation Cooperative Use Cases" including C-ITS use cases that require some form of grouping and cooperation, such as Group Start, Coordinated Cooperative Driving Maneuver, Curb-Side Management, Interactive VRU Crossing, Vehicle Decision Assist, Cooperative Traffic Gap, so on and so forth.

In scientific literature there are a number of works related to Wireless Sensor Network (WSN) and wireless short-range communication as listed below, where the majority of references focuses on solutions for out-of-network coverage operations:
[1] "A Comparative Study of Wireless Protocols: Bluetooth, UWB, ZigBee, and Wi-Fi", authors Karunakar Pothuganti and Anusha Chitneni, published in Advance in Electronic and Electric Engineering, ISSN 2231-1297, Volume 4, Number 6 (2014), pp. 655-662;
[2] "Wireless sensor networks: A survey on the state of the art and the 802.15.4 and ZigBee standards", authors Paolo Baronti, Prashant Pillai, Vince W.C.Chook, Stefano Chess, AlbertoGotta, Y. FunHua, published in Computer Communications, Volume 30, Issue 7, 26 May 2007, Pages 1655-1695;
[3] "Evaluation of wireless short-range communication performance in a quarry environment", authors Susanne Vernersson; Eleni Kalpaxidou; David Rylander, published in 2013 International Conference on Connected Vehicles and Expo (ICCVE), DOI: 10.1109/ICCVE.2013.6799812;
[4] "Energy savings by wireless control of speed, scheduling and travel times for hauling operation", authors David Rylander, Jakob Axelsson, Peter Wallin, published in 2014 IEEE Intelligent Vehicles Symposium (IV), DOI: 10.1109/IVS.2014.6856451;
[5] "Artificial Intelligence Supervised Swarm UAVs for Reconnaissance", authors Saatvik Awasthi, Balamurugan Balamurugan, V. Porkodi, published in May 2020 in the book "Data Science and Analytics", DOI: 10.1007/978-981-15-5827-6_33;
[6] "Flying ad-hoc networks (FANETs): A review of communication architectures, and routing protocols", authors Muhammad Asghar Khan, Alamgir Safi, Ijaz Mansoor Qureshi, Inam Ullah Khan, published in 2017 First International Conference on Latest trends in Electrical Engineering and Computing Technologies (INTELLECT), DOI: 10.1109/INTELLECT.2017.8277614;
[7] ENSEMBLE project presentation "Intelligent Maneuver Automation - cooperative hazard avoidance in realtime (IMAGinE)", author Lehmann B., 9th ETSI IST Workshop, March 6-8, 2018, Berlin,
[8] ENSEMBLE project publication "Specifications for multi-brand truck platooning", authors Edoardo Mascalchia, Alessandro Coda, Dehlia Willemsen, published in Proceedings of 8th Transport Research Arena TRA 2020, April 27-30, 2020, Helsinki, Finland.

CN 111 522 361 A (BEIJING INSTITUTE TECH) 11 August 2020 (2020-08-11) discloses a multi-unmanned aerial vehicle formation consistency control method in the master-slave mode is applied to unmanned aerial vehicle cooperative control, slave are equal in status, execute the same control algorithms, have no central control node, and belong to a distributed control architecture. The flight state of the formation can be controlled by the host. The method can adapt to various communication network topology structure forms, avoids centralized control of network topology forms of connection of all unmanned aerial vehicles and a control center, and flexibility of communication network selection brings better expandability, fault tolerance and adaptability to unmanned aerial vehicle formation application. A control center in the centralized control architecture is removed from the distributed control architecture, so that the phenomenon that the formation fails due to the fact that the central control node is damaged is avoided. Calculation tasks of controlling the unmanned aerial vehicle formation are transferred to airborne computers of member unmanned aerial vehicles by a control center, so that the overall calculation capability of the formation is greatly improved, and the performance bottleneck caused by the calculation capability is eliminated.

WO 2018/004681 A1 (INTEL CORP [US]) 4 January 2018 (2018-01-04) discloses a method and apparatus for managing node failures in a mesh network. In an example method for, a trigger is sent to a target node to return test data. The test data received from the target node is analyzed. The target node is classified as valid if the test data is within expected parameters.

FABRA FRANCISCO ET AL: "MUSCOP: Mission-Based UAV Swarm Coordination Protocol", IEEE ACCESS, [Online] vol. 8, 20 April 2020 (2020-04-20), pages 72498-72511, XP093108213, USAISSN: 2169-3536, DOI: 10.1109/ACCESS.2020.2987983 discloses, that Unmanned Aerial Vehicles (UAVs) have become the preferred, and sometimes the only support tool when facing critical scenarios such as earthquakes, search and rescue missions, and border surveillance. In these scenarios, deploying a UAV swarm instead of a single UAV can provide additional benefits when, for example, cargo carrying requirements exceed the lifting power of a single UAV, or when the deployment of several UAVs simultaneously can accelerate the accomplishment of the mission, and broaden the covered area. To this aim, in this paper we present MUSCOP, a protocol that allows multiple UAVs to perfectly coordinate their flight when performing planned missions. Experimental results show that the proposed protocol is able to achieve a high degree of swarm cohesion independently of the swarm formation adopted, and even in the presence of very lossy channels, achieving minimal synchronization delays and very low position offsets with regard to the ideal case.

SAMPEDRO CARLOS ET AL: "A flexible and dynamic mission planning architecture for UAV swarm coordination", 2016 INTERNATIONAL CONFERENCE ON UNMANNED AIRCRAFT SYSTEMS (ICUAS), IEEE, 7 June 2016 (2016-06-07), pages 355-363, XP032918037, DOI: 10.1109/ICUAS.2016.7502669 discloses a scalable and flexible Architecture for real-time mission planning and dynamic agent-to-task assignment for a swarm of Unmanned Aerial Vehicles (UAV). The proposed mission planning architecture consists of a Global Mission Planner (GMP) which is responsible of assigning and monitoring different high-level missions through an Agent Mission Planner (AMP), which is in charge of providing and monitoring each task of the mission to each UAV in the swarm. The objective of the proposed architecture is to carry out high-level missions such as autonomous multi-agent exploration, automatic target detection and recognition, search and rescue, and other different missions with the ability of dynamically re-adapt the mission in real-time. The proposed architecture has been evaluated in simulation and real indoor flights demonstrating its robustness in different scenarios and its flexibility for real-time mission re-planning and dynamic agent-to-task assignment. BENAVIDEZ PATRICK ET AL: "Multi-domain robotic swarm communication system", SYSTEM OF SYSTEMS ENGINEERING, 2008. SOSE '08. IEEE INTERNATIONAL CONFERENCE ON, [Online] 31 December 2008 (2008-12-31), pages 1-6, XP093108509, Piscataway, NJ, USA DO: 10.1109/SYSOSE.2008.4724189 ISBN: 978-1-4244-2172-5 discloses a viable solution for robotic swarm communication and navigation for different autonomous applications. Communication is achieved through ZigBee radio modems and an expandable protocol to accommodate different types of data. This proposed communication system also allows dynamic swarm expansion, where a new member can be added to the swarm family. It is a complementary approach for task coordination and navigation. Navigation is an important issue to accomplish the coordination of tasks in a swarm of robots. Different environmental issues, related to navigation, have been discussed and are presented through simulation results and the real-time communication test is presented through the experimental result.

MISRA SUDIP ET AL: "Dynamic Leader Selection in a Master-Slave Architecture-Based Micro UAV Swarm", 2021 IEEE GLOBAL COMMUNICATIONS CONFERENCE (GLOBECOM), IEEE, 7 December 2021 (2021-12-07), pages 1-6, XP034074281, DOI: 10.1109/GLOBECOM46510.2021.9685538 discloses a method for dynamically selecting leaders in a master-slave communication model in a swarm of micro-Unmanned Aerial Vehicles (UAVs). With the growing size of the UAV swarm in complex missions, it becomes a challenge to control them for efficient execution of missions. In a traditional centralized communication model where all UAVs in the swarm are controlled directly through ground control, channel capacity limits the number of UAVs in the swarm which restricts the scalability. In the context of low-power miniature drones, we limit the communication of the ground Base Station (gBS) with only one UAV (leader) which controls the rest of the UAVs (followers). Towards this, we propose a greedy heuristic method for selecting the UAV leader that requires minimal time to communicate with the gBS in real-time. The proposed master-slave model enhances the scalability of the swarm by improving the utilization of channel resources. Simulation results demonstrate that the proposed dynamic leader selection enhances the lifetime of the entire network with a multifold decrease in energy consumption, compared to the state-of-the-art. Additionally, the lifetime of the network also decreases on operating with a single UAV leader. We also observe reductions in delays by almost 60% and an increase in data rate by 50%.

Abundant patent literature address connectivity solutions based on swarm intelligence and related aspects. For example, US2013123981A1 discloses a swarm intelligence routing robot device, wherein multiple swarm intelligence robot devices configure a cluster. The swarm intelligence routing robot device configures and manages a wireless communication network to relay communication between the swarm intelligence robot devices which move in an atypical environment in the cluster and selects a location thereof. US2013128726A1 discloses a system and method for packet delivery backtracking, using a dynamic mesh network and redundancy of routes in a mesh and other techniques to increase the reliability of the network. US2014080527A1 describes an invention which provides for a modular radio frequency communications assembly including a radio frequency hub and one or more radio frequency modules. US2017093697A1 discloses a method for controlling flood broadcasts in a wireless mesh network. In order to balance reliability with efficiency, this invention defines a threshold for a number of neighboring nodes as seen by a given node prior to a flooding operation to determine whether data should be unicast or broadcast. Below that threshold, unicast is used; at or above that threshold, broadcast is used. The invention also incorporates knowledge of nodes seen in turn by neighbor nodes as part of this decision. US2018097647A1 describes systems, devices and methodology for removing echo and reducing congestion in multicast (broadcast) over a dynamic self-healing mobile mesh network, by use of discrete embedded computers synchronously tracking mesh connections and link quality across multiple RF connections, keeping multicast both efficient and effective in a highly kinetic, ever changing, mesh topology. US2020322895A1 provides a system and method for controlling dynamic transmit power in a mesh network are disclosed. Distributed power transmits management methodology that implements transmission power management based on a comparison of signal to noise ratios from received beacon packets is used on a peer-to-peer basis. Embodiments work to keep all nodes accessible, dynamically adaptable to constant changes in the network, maximize frequency reuse, and reduce power requirements to maximize network performance while minimizing interference. US2016381596A1 relates to an Intelligent Multi-Beam Medium Access Control in KU-Band for Mission-Oriented Mobile Mesh Networks. It is described a MAC design for KU-band mobile wireless mesh network with multi-beam smart antennas. This MAC includes an overlay control that separates the collision domain. It also has lower layer CSMA-like scheme. The disclosed design includes an enhanced PCF and an enhanced DCF for two purposes: (1) exploiting multi-beam concurrent communication capability, and (2) supporting QoS and mission-based communications. An efficient time synchronization scheme is also disclosed to ensure all beams can concurrently send data to the star node. Finally, ARMA or HMM based prediction schemes are disclosed to predict future traffic profile in each beam. This helps the star node to better prepare the queue content and schedule information. US2018167452A1 refers to a method and system for distributed spatial control of a formation of vehicles includes receiving at a first formation vehicle via a peer-to-peer communication interface, direction of travel and formation density information that indicate a course of travel for the first vehicle while travelling as a member of the formation of vehicles. The peer-to-peer formation density information indicates a distance to maintain from other neighboring formation vehicles. A formation vehicle self-navigation command is generated for navigating the first vehicle when travelling in one dimensional, two dimensional, or three-dimensional space as a member of the formation of vehicles. The self-navigation command is based on the peer-to-peer direction of travel and formation density information. The direction of travel information is based on locally determined spatial relationships of a portion of the formation of vehicles. Intel's patent application US2019049931A1 discloses systems, apparatus, and methods for robot swarm coordination. University of Southern California patent US6636781 describes techniques of distributed control and coordination of autonomous agents in a dynamic, reconfigurable system.

However, usually connectivity, or more precisely, mobile network coverage is the decisive factor determining which connectivity use cases can be enabled. More precisely, limited or insufficient mobile network coverage in remote areas is still a key challenge across those industry domains. Automated vehicles or robots may be operating at work sites with potentially huge dimensions and large physical separation between swarm members, requiring a selection of suitable radio technologies depending on the operational context.

Therefore, the technical problem to be solved, in this context, is to find solutions that enable efficient operations of an autonomous swarm even in areas without network coverage as well as harsh environments.

It is an object of the present invention to provide a communication system for coordinating and managing operations of a swarm of automated entities - vehicles and/or robots - according to independent claim 1, a correspondent method of communication according to independent claim 19. Additional independent claims are claiming a swarm master apparatus, a swarm slave apparatus, a computer-implemented program that directs a swarm master's computing system to function in a specified manner to manage a swarm, as well as a computer-implemented program that directs a swarm slave's computing system to function in a specified manner to be managed in a swarm.

According to a first aspect of the invention, there is provided a system for coordination and management of a swarm of automated entities, wherein the swarm comprises at least a designated master and a slave. Each automated entity includes data processing means, namely at least one processor coupled with at least one memory and adapted to execute instructions that facilitate operations of program modules, and each automated entity has specific assets and abilities necessary to interoperate with other entities and perform a mission as swarm. A swarm management module is instantiated at the master, the swarm management module comprising a mission planning manager adapted to receive or load a mission and to provide a mission configuration, wherein the designated swarm master is configured to announce itself over a communication module and a communication link, and to request at least one automated entity different from and external to the master to join in the performance of the mission as swarm slave.

Thus, the concept of a "master" (or a "swarm master") is introduced to locally operate as a managing and coordinating entity that is able to orchestrate automated swarm operations without the need of a cloud backend system connection. Further, such a master is assumed to possess wireless communication capabilities for coordinating the swarm's mission execution.

In one embodiment, the mission planning manager of master is configured to receive or load a mission plan defined according to pre-defined catalogues, further on to perform an asset inventory based on the received or loaded mission plan, meaning to further request or reject assets, and, based on the assets inventory performed, to create the mission configuration derived from mission plan.

High-performance computers are able to generate a mission plan based on a received or loaded mission, to derive a mission configuration out of mission plan, further on to divide a complex mission plan into a set of tasks to be performed and to generate task schedules, as well as dependencies among the tasks and various swarm entities. Swarm is dynamically managed, which means the status of mission performance is continuously analyzed according to status reports collected from swarm entities, in order to complete the mission.

In some embodiments, a swarm formation manager is instantiated at each slave that respond to the request of the master, provided the slave matches a profile derived from mission configuration, wherein the swarm formation manager of each slave is configured to receive a role in swarm, to join a swarm and to receive instructions related to swarm formation. A swarm operations module is further instantiated at master, the swarm operations module being configured to receive or load instructions and sets of key data, to coordinate the execution of operations and tasks derived from mission configuration and monitor the performance of the mission by the swarm.

In a similar way, a swarm operations module is further instantiated at each swarm slave that respond to the request sent by master and is configured to receive or load instructions and sets of key data, to be coordinated in the execution of operations and tasks derived from mission configuration and to report the performance of tasks by each swarm slave. Each swarm entity may comprise a human-machine interface by means of which manual control instructions are received from an operator. The master may be included in a backend system, and more specific a cloud backend system.

In some embodiments, the swarm formation manager of master is configured to generate a first set of key data, the first set of key data comprising: swarm identity, slave identities, mission type, swarm entity types, role assignments, behavior policy, encoded as a list of rules per event, entity role, and entity type, task schedules, swarm entities trajectories.

In some embodiments, the swarm formation manager of master is further configured to generate a second set of key data as input data to the swarm operations module of the master, the second set of key data comprising: mission type, behavior policy, task schedules and swarm entities trajectories. The swarm formation manager of each slave is configured to receive the first set of key data, and to provide the second set of key data comprising: mission type, behavior policy, task schedules and swarm entities trajectories. Further on, the swarm formation manager of each swarm slave is configured to provide the second set of key data as input data to the swarm operations module of the respective swarm slave.

In some embodiments, each swarm entity further comprises a motion module configured to process received task and trajectory data and to provide motion status data as output.

In some embodiments, each swarm entity further comprises a perception module configured to process data provided by sensorial means and to provide object data regarding the presence of entities in the swarm's operational surroundings. The motion module of each swarm entity further receives object data related to other entities from perception module, and object data related to other swarm entities received from communication module.

In some embodiments, the swarm operations module of master is configured to regularly collect mission status data. Each swarm entity further comprises an event module configured to log status and data and further to regularly perform the health check of own swarm entity and to report own status to swarm operations module. Each swarm entity further comprises a hazard module configured to log status and hazard data concerning unplanned events, mishaps and issues, and to report such hazard data to the event module.

In some embodiments, the communication module of master sends and receives a third set of key data to and from the communication module of each slave, the third set of key data comprising: swarm identity, slave identity, mission type,
entity type, role assignments, behavior policy, status reports, task schedules, entity trajectories.

According to a second aspect of invention, there is provided a method of communication for coordination and management of a swarm of automated entities. The method comprises: receiving, by the master, an indication of a mission assigned to the swarm; sending, by the master, a master announcing message, to at least one potential slave, reachable directly or indirectly over at least one communication link, the master announcing message comprising a mission type; receiving, by all reachable potential slaves, the master announcing message to check if at least one potential slave has a profile that matches the mission type, the profile including assets and abilities matching the announced mission type; and sending in return, to the master, at least one swarm joining message, by at least one of the slaves that has a profile matching the announced mission type, directly or indirectly over the communication link.

In one embodiment of the method according to invention, all swarm-related messages have a standardized and extended message format as part of a swarm container.

Additionally, the method comprises analyzing, by data processing means of the master, the received messages from all responding slaves to determine the mission plan or the mission configuration based on the assigned mission; and distributing, by communication means of the master, either the mission plan or the mission configuration to all slaves. The mission plan and/or mission configuration are defined according to pre-defined catalogues, and the mission configuration specifies a set of entity types to be assigned to swarm.

Additionally, the method comprises sending by master a set of swarm management messages, wherein swarm management messages comprise a first set of key data including identifiers of the swarm, swarm entity type, mission type, role, behavior policy encoded as a list of rules per event and role, entity trajectories and a set of task schedules to be performed during performance of the mission plan.

Additionally, the method comprises regularly sending by slaves and receiving by master a set of status report messages, at pre-defined time intervals or in case of unplanned events, wherein status report messages includes identifiers of the swarm, swarm entity type, mission type, role, task, task start time and estimated task end time, task status, estimated time to finish task, communication status, and fuel or energy status.

Additionally, the method comprises that each swarm slave propagates swarm management messages, spreading the first key data across the reachable swarm slaves, and optionally together with the second key data on the reachable swarm entities farther, over various communication protocols.

Each reachable entity that joins the swarm being reached by another swarm slave considers the master of reaching swarm slave as its own master.

Optionally, the method comprises an assignment of a deputy master role to at least one swarm entity that has a profile that matches the master profile and is eligible as deputy master. The method further comprises monitoring, by the deputy master, the master messaging. A transfer of master role to the deputy master may be possible in case the current swarm master is not able to act according to master role requirements, wherein the master role transfer is ruled by the behavior policy.

Optionally, the method comprises announcing a change or a transfer of master role by issuing a new master announcing message which informs the swarm that a new swarm master is replacing the current master.

Further on, the method includes temporally synchronizing operations across the master and slaves, the synchronizing including generating and maintaining an event queue that logs status and data and performs a regular health check, the logged status and data including hazard data such as unplanned events, mishaps and issues.

In a preferred embodiment of the method according to invention, swarm communication is hybrid, employing a client-server and/or a peer-to-peer communication scheme.

According to a third aspect of invention, there is provided a swarm master apparatus comprising an automated driving module, a motion module and a perception module. The swarm master apparatus comprises at least one processor coupled with at least one memory and adapted to execute a routine that includes instructions for managing a swarm and performing a mission assigned to swarm, and hardware means necessary for performance of the mission, such means comprising a swarm management middleware. Also, there are provided means for communicating with other swarm entities and with entities outside swarm, such means comprising a communication management middleware.

Additionally, there is provided a swarm slave apparatus comprising an automated driving module, a motion module and a perception module. Further on, the swarm slave apparatus comprises at least one processor coupled with at least one memory and adapted to execute a routine that includes instructions for joining a swarm at the request of a swarm master and performing a task scheduled on a mission configuration, and hardware means necessary for performance of the task; and means for communicating with swarm master, other swarm slaves and with entities outside swarm, such means comprising a communication management middleware.

Like this, the on-board communication module of each swarm entity is ultimately controlled by the swarm management middleware that chooses for each data type or message an appropriate radio technology or communication channel, depending on the data communication requirements as well as the swarm entity's operational context, taking into account parameters such as location, vehicle speed, relative speed or orientation with respect to other swarm entities, radio signal round-trip time estimates for ranging etc. Moreover, communication cost and related trade-offs, in particular when cellular or satellite communication are concerned, are taken into account. Here, energy and fuel consumption of individual swarm entities are also important parameters for overall mission efficiency.

In a fourth aspect of invention, there is provided a computer implemented program comprising at least one program module that directs a swarm master's computing system to function in a specified manner to manage a swarm and perform a mission assigned to the swarm. The program module may include instructions for receiving an indication of a mission assigned to the swarm, sending a master announcing message, to at least one potential slave reachable directly or indirectly over at least one communication link, the master announcing message comprising a mission type, receiving swarm joining messages from at least one responding slave that has a profile matching the announced mission type, directly or indirectly over the communication link, analyzing the received messages from all responding slaves to determine a mission plan or a mission configuration based on the assigned mission, distributing either the mission plan or the mission configuration encoded in swarm management messages to the responding slaves, and regularly collecting from slaves reports on status of performance of mission.

Additionally, it is provided a computer-implemented program comprising at least one program module that directs a swarm slave's computing system to function in a specified manner to join a swarm and perform a task scheduled according to a mission assigned to swarm, the program module including instructions for: receiving a master announcing message including a mission type, checking if slave profile matches the mission type, the slave profile including computing resources and abilities matching the announced mission type, sending in return, to the master, at least one swarm joining message, when the slave profile matches the announced mission type, joining in the performance of the task, and regularly sending to master reports on status of the performance of the scheduled task.

The invention is advantageous because enables coordination and management of an automated swarm, including selecting (among many supported connectivity technologies) the most suitable communication channel for wireless communication to vehicles/devices located outside of mobile network coverage by using relaying as well as multi-hop communications. Moreover, the swarm management establishes a certain hierarchy within the swarm structure, including a fallback mechanism.

Further special features and advantages of the present invention can be taken from the following description of advantageous embodiments by way of the accompanying drawings.

### Figures

Fig. 1 illustrates an exemplary swarm employing one master vehicle and two slave vehicles,
Fig. 2 presents an exemplary embodiment of swarm formation for an agricultural scenario, with one master vehicle and several slave vehicles,
Fig. 3 illustrates an exemplary task schedule for a swarm dedicated to a mission,
Fig. 4 presents a block diagram of a swarm system, according to invention,
Fig. 5 displays a block diagram of one embodiment of a master computing system,
Fig. 6 displays a block diagram of one embodiment of a slave system,
Fig. 7 shows a block diagram of one embodiment of a swarm architecture comprising a backend device, a master apparatus and a slave apparatus,
Fig. 8 presents a sequence diagram of a master announcing message, using an extended CAM format,
Fig. 9 illustrates a sequence diagram of communication between an operator and a master, concerning mission planning,
Fig. 10 presents a sequence diagram of communication between operator, backend and master, concerning mission planning,
Fig. 11 shows a sequence diagram of communication between master and slave during swarm formation,
Fig. 12 presents a sequence diagram of communication between master and slave during swarm operations,
Fig. 13 illustrates a comprehensive sequence diagram of communication between backend, master and slave concerning swarm operations
Fig. 14 shows a sequence diagram of a master announcing message, using an extended CoAP format.

### Detailed description

For a better understanding of the principles of the present invention, embodiments of the invention will be explained in more detail below with reference to the figures. Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

As referred to herein, "swarm of automated entities" or "swarm" or "automated swarm" means two or more automated entities such as autonomous vehicles, robots or unmanned aerial vehicles, whose motion is mutually and automatically coordinated by a remote coordinator (either an operator or an automated entity). The coordinating entity is referred herein as "master" (or "swarm master"). The generic term of "slave" or "swarm slave" referred to herein includes an automated entity (i.e., vehicle or robot) directly controlled by the master. Both master and slaves, members of a swarm, are referred to as "swarm entities".

Various embodiments described herein are generally directed to techniques of communication for management and coordination of a swarm, in particular monitoring execution of tasks derived from a mission assigned to the swarm, the tasks being distributed among multiple swarm entities.

However, as part of enabling a dynamic swarm management and coordination, there is mandatory that communication among swarm entities be kept unobstructed, no matter how much the entities and the hierarchy in the swarm change until the assigned mission is completed.

To address such issues, one or more program modules performing various swarm coordination and/or management functions may be instantiated within one or more swarm entities, depending on the role assumed within swarm, such as master or slave. Such swarm-related program modules may process, generate and maintain sets of key data as inputs and outputs between swarm entities. Communication may use various protocols that enable the preservation of information about the status of execution of various tasks among swarm entities. Thus, when an event causes cessation of a task execution, another instance of the same task may be restarted in order to ensure that the tasks supposed to be performed are ultimately performed by the same entity or by a replacing entity.

The first aspect of invention concerns a system for coordination and management of a swarm of automated entities.

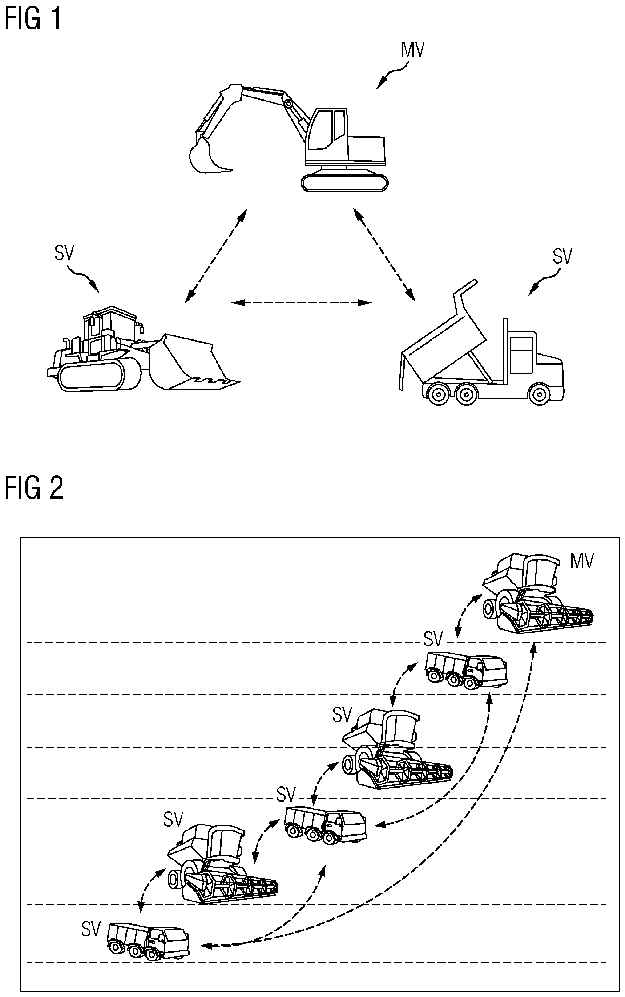

Referring now to Fig. 1, it is shown an exemplary swarm employing one master and two slaves as swarm entities. In this embodiment, the concerned swarm entities are heavy machines for mining (for example, an excavator, a loader, and a dump track).

Fig. 2 presents an exemplary embodiment of swarm formation for an agricultural scenario, with one master and several slaves as swarm entities. More precisely, there is presented a scenario where several teams of combine harvester and loading machines are employed.

In the context of this invention, a mission plan is a set of steps, resources (e.g., assets), dependencies, and conditions organized in a sequence that may be scheduled and executed by various swarm entities as to complete a mission. A mission configuration is an arrangement of swarm entities, assigned to respective roles and tasks and interconnected according to functional and operational requirements and constraints as to make the swarm operate as efficient as possible. A task is a routine, an action or a function assigned to be performed by a swarm entity as to complete the assigned mission.

During mission planning, it is possible that sub-sets of suitable entities to be assigned to a task type, considering the swarm entities' profiles. It may be determined that several entities with the same profile jointly perform the same task.

Since each operational swarm scenario may require different types of entities with certain abilities and roles, a catalogue of mission types should be defined. This catalogue could be tailored to a specific customer. An exemplary mission type catalogue is depicted by Table 1.

**Table 1: Exemplary Mission Type Catalogue**

| Mission Type #1 | Mission Type #2 | Mission Type #3 |
|---|---|---|
| Vehicle type #1 | Vehicle type #3 | Vehicle type #5 |
| Vehicle type #2 | Vehicle type #4 | Vehicle type #6 |
| | | Vehicle type #7 |

Furthermore, a concrete schedule of potentially parallel task executions is to be determined during mission planning. Master may choose to broadcast the mission type identifier, which is linked to a predefined task type catalogue. Table 2 shows an exemplary predefined task type catalogue. In this particular case, two specific types of mission were considered: "construction", employing operations (tasks) such as drilling, digging, loading, dumping, paving, and "agriculture", with specific operations such as plowing, seeding, harvesting, dumping, fertilizing. Mission and task types may be encoded using hexadecimal identifiers, respectively.

Further, the task type is linked to a predefined mapping of suitable entity profile identifiers. These implicit definitions should help to reduce the data volume to be exchanged among swarm entities. Table 3 presents such exemplary data. For example, for a mining mission, and for a first task (drilling), there are assigned several slave entities. Likewise for the rest of the tasks (digging, loading). For transport and dumping, just one slave vehicle is assigned.

**Table 2: Exemplary Task Type Catalogue**

| Mission Type #1 (Construction) | Mission Type #2 (Agriculture) |
|---|---|
| Task type #1 (Drilling) | Task type #1 (Plowing) |
| Task type #2 (Digging) | Task type #2 (Seeding) |
| Task type #3 (Loading) | Task type #3 (Harvesting) |
| Task type #4 (Dumping) | Task type #4 (Dumping) |
| Task type #5 (Paving) | Task type #5 (Fertilizing) |

These predefined relationships should be known by each swarm entity in advance. Thus, each swarm entity receiving a certain mission type identifier can independently check, if its abilities encoded as profile (i.e., entity profile identifier) matches the profile of the requested mission type and respond with its entity profile identifier and entity type identifier.

**Table 3: Predefined Relationship between Mission Type, Task Type, and Vehicle Profile identifiers**

| Mission Type #1 (Mining) | Vehicle Profile ID |
|---|---|
| Task type #1 (Drilling) | Vehicle profile #1 |
| | Vehicle profile #2 |
| | Vehicle profile #3 |
| Task type #2 (Digging) | Vehicle profile #3 |
| | Vehicle profile #4 |
| | Vehicle profile #5 |
| Task type #3 | Vehicle profile #3 |
| (Loading) | Vehicle profile #4 |
| | Vehicle profile #5 |
| Task type #4 (Transporting) | Vehicle profile #6 |
| Task type #5 (Dumping) | Vehicle profile #6 |

Initially, all slaves with an entity profile identifier that matches the requested mission type respond to the master and provide their entity identifier. The master receives the individual responses and determine how many entities with a certain profile identifier are required for various tasks as specified in the mission configuration. However, for a specific task, swarm formation may mean that only a subset of those swarm entities with matching entity profile identifiers may receive a request to join the swarm or a team within swarm dedicated to the specific task. For example, if more slaves with a certain entity profile identifier are present than needed for task, the master may request only those selected for that specific task. Nevertheless, this implies that the master can reach all slaves (in a direct or indirect manner). Further, the master should receive replies from all eligible slaves in order to identify suitable swarm entities for that specific task. The slaves that do not receive a response from the master within a predefined time interval may perform another predefined task (as specified in a behavior policy). Optionally, the master may respond to the slaves which have not been selected for the specified task or mission and may notify them about their "rejection" upon which those slaves perform a predefined task (as specified in the behavior policy).

The behavior policy may enforce a set of rules in which to encode a list of rules per event and entity role. Behavior policy may provide rules on how to proceed when an emergency braking occurs for a slave entity, for example, or how to trigger a transfer of roles from one swarm entity to another, or may enforce one or more limitations on the consumption of time and/or resources, and/or other parameters on the execution of a task or a communication. It may be that the behavior policy enforces a set of rules in which the execution of a task that exceeds one or more of such parameters results in the task being unsuccessfully executed such that it is deemed necessary to trigger the cessation of the associated mission plan.

An exemplary predefined behavior policy is described in the following:
Send "rendez-vous" location at start-up when swarm entities are not able to connect to any other swarm entity,
Send "rendez-vous" location when mission completed,

In case of hazard: log and report event data, check vehicle health status, continue operations.

Several unplanned events are considered as hazard and logged and reported as such:
- running out of fuel or energy,
- no communication to any swarm entity since X time units,
- not able to operate due to broken part/maintenance needed,
- no request to join a swarm was received.

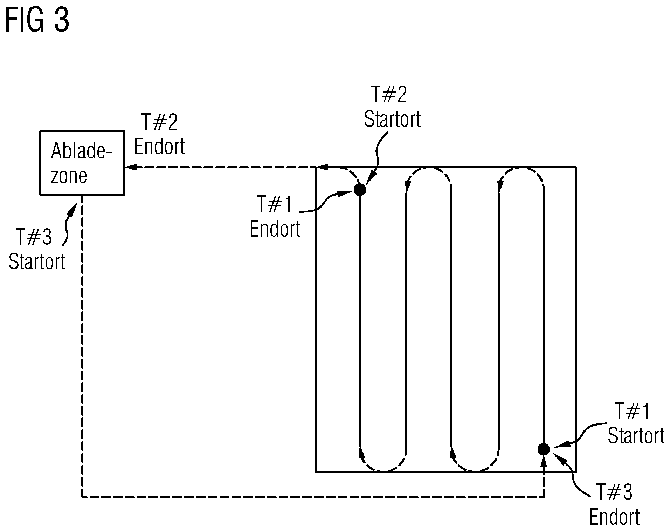

Fig. 3 illustrates an exemplary task schedule for a swarm dedicated to a mission, and more specific, the swarm having as mission mining from a start location that coincides with a first task (e.g., excavation) start location. This exemplary task may be communicated by master to slaves. For example, each task schedule may provide data as start time, and start location, estimated end time and end location. Optionally, entities trajectory consisting of various segments may be provided:
Task #1:
   - start time, start location,
   - (estimated) end time, end location,
   - entity trajectory (consisting of various segments),
Task #2:
   - start time, start location,
   - (estimated) end time, end location,
   - entity trajectory,
Task #3:
   - start time, start location,
   - (estimated) end time, end location,
   - entity trajectory.

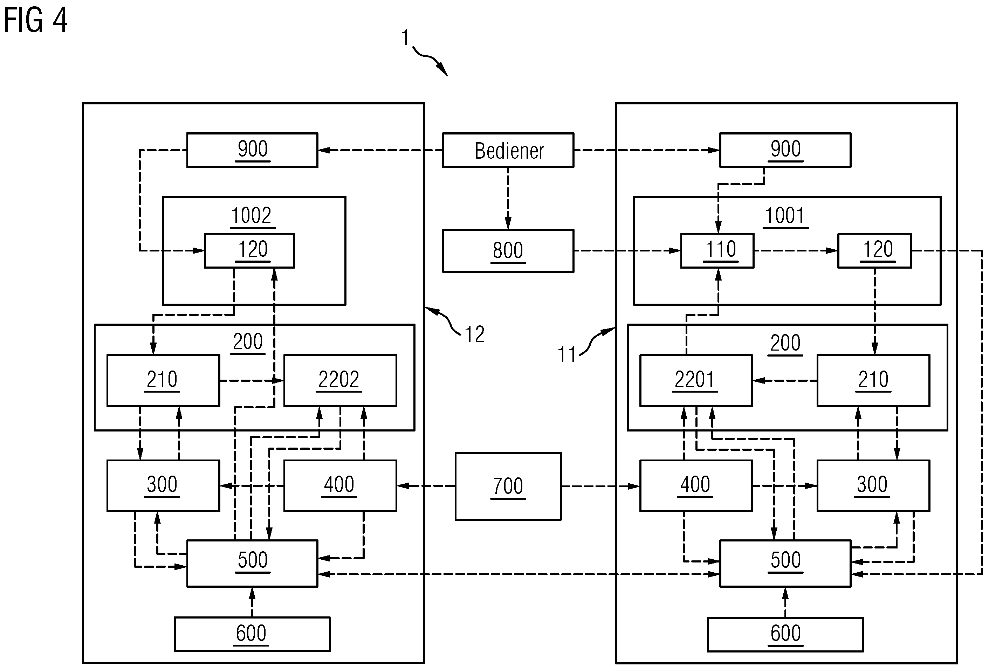

Fig. 4 presents a block diagram of an exemplary embodiment of a swarm system according to invention.

Swarm system 1 comprises multiple instances of master and slave entities interoperable as a dynamically coordinated computing system and illustrated as a representative swarm master 11 (or "master") and a representative swarm slave 12 (or "slave"). More specific, master 11 is a computing system configured to instantiate a master's swarm management module 1001, a swarm operations module 200, a motion module 300, a perception module 400, a communication module 500 and a localization module 600 (e.g., a computing unit able to process and provide position data). Slave 12 is a computing system configured to instantiate a slave's swarm management module 1002, and correspondent swarm operations module 200, motion module 300, perception module 400, communication module 500 and localization module 600. Other entities outside swarm, for example vehicles or road users 700 may have their presence perceived by means of perception module 400, namely computing units able to process object data provided by sensorial means (e.g., radars, cameras, ultrasound sensors, etc.).

Swarm master management module 1001 and swarm slave management module 1002 include each a swarm formation manager 120, while swarm master management module 1001 has a mission planning manager 110 in addition. An operator may assume the role of master, and as such to manually control the swarm via an interface module 900, for example a human-machine interface HMI. The master role may be supported or even assumed by a backend system 800, if establishing a connection to such a backend system 800 is possible. More specific, backend system 800 may be a cloud backend system.

Any designated swarm master 11 is configured to announce itself as such over communication module 500 and a communication link, and to request at least one automated entity different from and external to the master (i.e., slave) to join in the performance of a mission as swarm slave 12. Once a mission or a mission plan received or loaded (either from operator or from backend system 800) by mission planning module 110 at swarm master 11, mission planning manager 110 is configured to generate a mission configuration and to provide it to the swarm formation module 120 of swarm master system 11. In one embodiment, the mission configuration may also be augmented with manual control instructions that are to be executed during performance of the mission. By way of example, interface module 900 may provide an operator with an opportunity to select one or more manual control commands such as leave, re-join or re-set/re-configure in response to specific status reports received from swarm.

Further on, master's swarm formation manager 120 is configured to provide a first set of key data to communication module 500 of master 11, this first set of key data being derived from mission configuration. As will also be explained in greater detail, an example of first set of key data includes swarm identity, slave identity, an entity type identifier (for example, which type of vehicle is needed for performing the mission), mission type, role assignments, task, task schedules (comprising task start time and estimated task end time, estimated time to finish task), task status, communication status, fuel or energy status, behavior policy and entity trajectories.

Swarm formation manager 120 of master 11 is configured to provide a second set of key data to swarm operations module 200 of swarm master system 11. Second set of key data is derived from mission plan and is communicated to each swarm entity. An example of second set of key data includes at least mission type, behavior policy, task schedules and entity trajectories.

Swarm operations module 200 of master 11 comprises two managers: an operations and task execution manager 210 and a status collection and monitoring manager 2201.

Given the second set of key data mentioned before, operations and task execution component 210 of master 11 configures and provides tasks and entity trajectory data to the motion module 300 of master 11. Master motion module 300 further process and report motion status back to operations and task execution manger 210, which is configured to further report status to a status collection and monitoring manager 2201 of master 11 (or "master status manager" 2201). Other data and information are regularly collected by master status manager 2201 from perception module 400 (i.e., object data concerning the presence of other vehicles and/or road users 700, none of them swarm entities) and from communication module 500 (concerning other's status), while master status manager 2201 send regular reports about its own status to communication module 500. Once a mission is completed, the same master status manager 2201 send this information to mission planning manager 110 of master 11.

Motion module 300 also provides entity motion data (e.g., vehicle dynamics data, such as vehicle speed, acceleration, and orientation, when the concerned entity is a vehicle) to communication module 500 and receives external or V2X (i.e., received by vehicle-to-everything communication means) object data from communication module 500, besides the directly sensed object data from perception module 400 discussed above. At its end, perception module 400 provides directly sensed object data to communication module 500, to master status manager 2201 and to motion module 300. Another data sent to communication module 500 is location of master and is provided by localization module 600.

Swarm formation manager 120 at each slave 12 is configured to receive the first and the second set of key data mentioned before from communication module 500 of master 11. Further on, swarm formation manager 120 of each slave 12 is configured to process the received first set of key data and to provide the second set of key data destined to be communicated to swarm entities, including at least mission type, behavior policy, task schedules and entity trajectories. The second set of data is sent to swarm operations module 200 of each slave 12.

Swarm operations module 200 of slave 12 comprises two managers: an operations and task execution manager 210 and a status collection and reporting manager 2202 (or "slave status manager" 2202).

Given the second set of data mentioned before (mission type, behavior policy, task schedules and entity trajectories), operations and task execution manager 210 of each slave 12 configures and provides tasks and entity trajectory data to the motion module 300 of slave 12. Motion module 300 further process and report motion status back to operations and task execution manager 210 of each slave 12, which is configured to further report status to the slave status manager 2202 of each slave 12. Other reports are collected by each status manager 2202 of each slave 12 from perception module 400 (comprising object data of other vehicles and/or road users 700, none of them swarm entities) and from own slave communication module 500 (reports concerning other's status), while status manager 2202 of each slave 12 send reports on its own status to communication module 500 of each slave 12.

Motion module 300 of each slave 12 also provides dynamics data to own communication module 500 of the slave and receives external or V2X object data from own communication module 500, besides the directly sensed object data from perception module 400 of the slave. At its end, perception module 400 of the slave 12 provides directly sensed object data to communication module 500 of respective slave, to the status manager 2202 and to motion module 300 of the slave. Another data sent to each slave communication module 500 is location of own slave entity and is provided by slave localization module 600. In the end, each communication module 500 of slave 12 send back to communication module 500 of master 11 a third set of key data, including updated information of swarm identity, slave identity, mission type, role assignments, behavior policy, status reports, task schedules, entity trajectories.

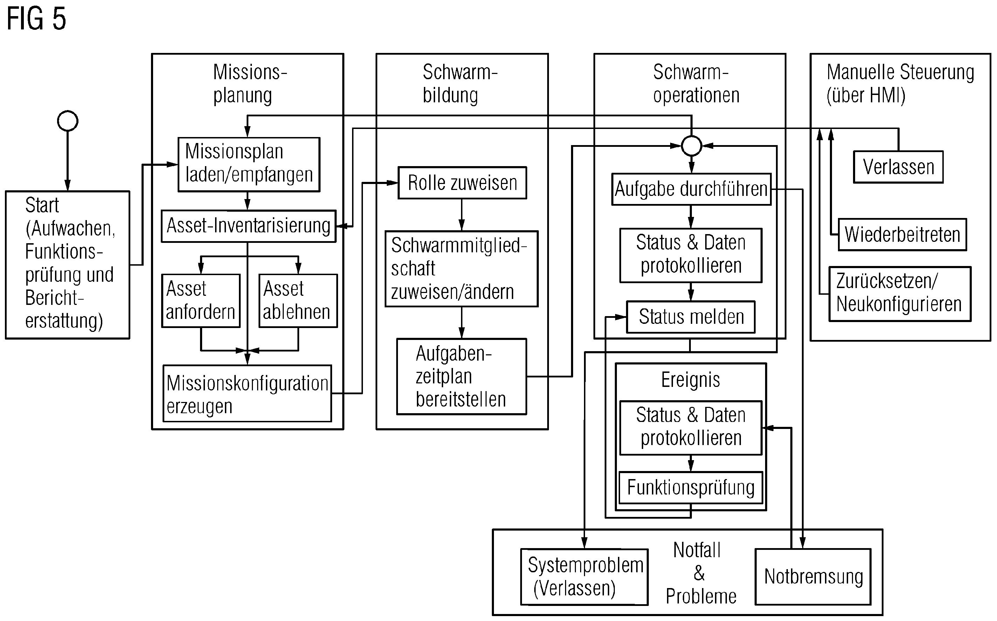

Fig. 5 displays a block diagram of one embodiment of a master system, according to invention, in order to show specific functions provided by specific modules or managers of a master.

Master system comprises specific modules and managers allocated to enable specific abilities and functions associated to the role of swarm master, namely:
- mission planning, including performing assets inventory, and creating mission configuration,
- swarm formation, by initial swarm announcement; assigning or changing roles (including fallback for hijacked master, for example); adding or removing a swarm entity,
- check swarm health status,
- distribute or send instructions or commands to a swarm entity (swarm operations),
- log all activities (messages, information flow),
- send status reports to master or backend (including "mission completed" status report).

As more specifically depicted in Fig. 5, once a master is designated, it operates as following: an usual start-up module initates an wake-up routine, including health check and reporting; once completed the wake-up routine, the mission plan is loaded or received at mission planning manager (as already discussed before). At this stage it is also possible to intervene directly and reconfigure an initial mission, via the manual control interface, with instructions and commands such as "leave", "rejoin", "reset" or "reconfigure". Next step is an asset inventory, by "asset" understanding any data, hardware or software means (e.g., program module) that support swarm-related activities. Following such inventory, it is possible to request additional assets, or to reject some of them. This step is revisited any time the swarm is changed or reconfigured due to various causes (leave of one or more swarm entities, crashes of some modules, system failure, etc.). Once the asset inventory is done, the mission planning manager is able to generate the mission configuration. Further on, the swarm formation module receives the mission configuration and proceeds to an initial swarm formation by role assignments: for example, not only the role of slave or master to be assigned to respective types of swarm entities, but an additional role of deputy master, where the deputy master role means a swarm entity configured to monitor the designated master messages as to be able to detect if the master ceassed to communicate properly due to various causes. In case the swarm is already formed, the swarm may be changed (some entities to be added, dismissed or paused). Once the swarm is formed, task schedule(s) is provided to each swarm entity. Further on, the swarm operations manager of master initiates tasks performing. As far as a mission advances towards completion, associated mission status and data are logged and mission status reports are collected by the master' swarm collecting and reporting manager. In case an unplanned event happens, hazard status and data are also logged, a health check is triggered and mission status report is updated. Sometimes, such hazard may prevent the finalization of the mission, which means that the mission plan should be adapted to such a situation.

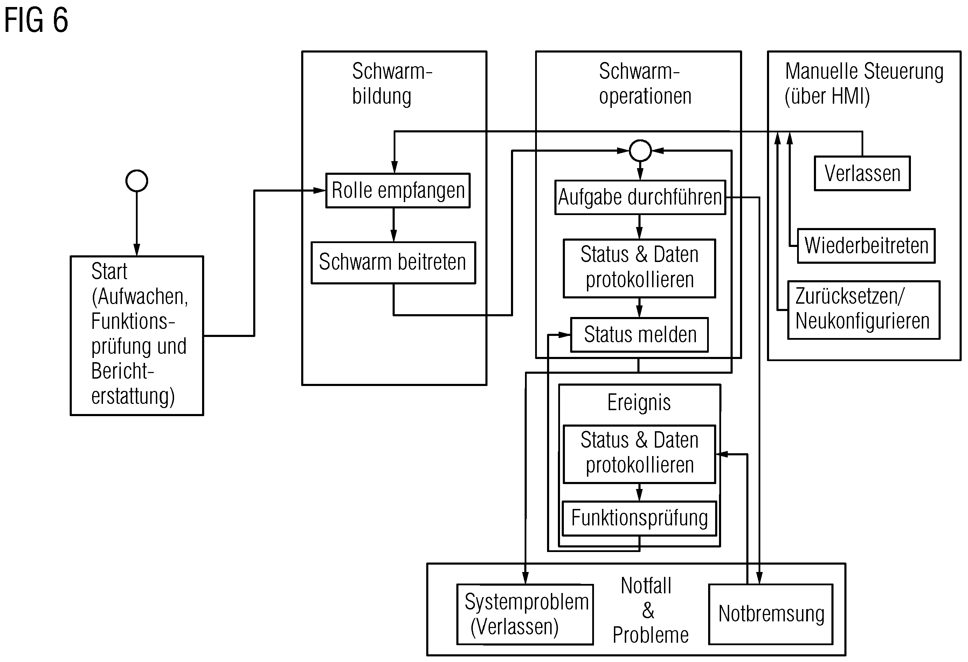

Fig. 6 displays a block diagram of one embodiment of a slave system, according to invention.

Slave system comprises specific modules and managers allocated to enable specific abilities and functions associated to the role of swarm slave, namely:
- wake-up,
- perform own asset inventory and/or health check and report it,
- change role (assume master or deputy master),
- join swarm, react upon commands,
- log all activities (messages, information flow) and
- send status reports to master (including "mission completed" status report).

Slave system also includes an usual start-up module that initates an wake-up routine, including health check and reporting; once completed the wake-up routine, the role within swarm is received by the slave' swarm formation manager or directly from an operator, via manual control interface. Next step is initiating the performance of task(s) by the slave's swarm operations module. Logging of status and data is performed and status is regularly reported. As far as a task advances towards completion, associated task status and data are logged and task status reports are collected and reported further on to swarm master. Hazard status and data are also logged by each slave, a health check is triggered and task status report is updated. Sometimes, such hazard may prevent the finalization of the task, which means the task schedule should be re-adapted to the real situation.

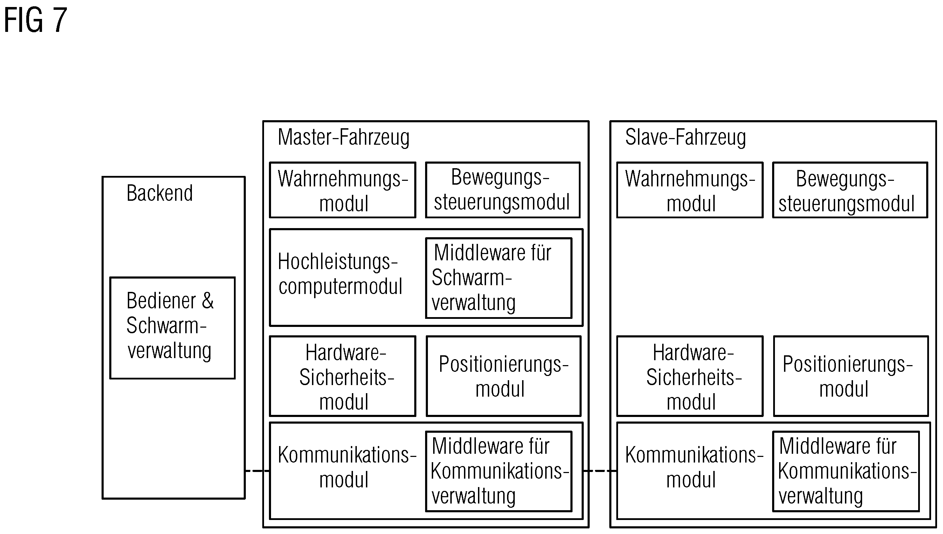

Fig. 7 shows a block diagram of one embodiment of a swarm architecture comprising a backend device, a master apparatus and a slave apparatus.

According to one embodiment of invention, a swarm master apparatus may include an automated driving module (not illustrated), a motion module and a perception module. The perception module may electronic units able to collect and process sensor data and to provide object data regarding the presence of entities in the swarm's operational surroundings.Motion control module may comprise electronic units able to control the entity's motion in terms of speed, acceleration, deceleration, relative speed and orientation, so on and so forth. As illustrated, the swarm master apparatus may be provided with a hardware security module (comprising electronic units able to control the cyber-security of the entity system) and a positioning module (i.e., a GPS unit). Most important, at least one processor coupled with at least one memory and adapted to execute a routine that includes instructions for managing a swarm and performing a mission assigned to swarm is provided. Also, hardware means necessary for performance of the mission are provided, such means comprising a swarm management middleware; and means for communicating with other swarm entities and with entities outside swarm, such means comprising a communication management middleware.

There is provided a swarm slave apparatus that comprises at least one processor coupled with at least one memory and adapted to execute a routine that includes instructions for joining a swarm at the request of a swarm master and performing a task scheduled on a mission configuration. Additionally, hardware means necessary for performance of the task are provided; and means for communicating with swarm master, other swarm slaves and with entities outside swarm, such means comprising a communication management middleware. Again, a swarm slave apparatus may include an automated driving module, a motion module and a perception module.

In some embodiments, a backend device comprises the hardware modules of a swarm master, plus the interface that provides the augmented opportunity for an operator to manage the swarm by direct intervention.

The method of communication for coordination and management of a swarm of automated entities, according to a second aspect of invention is described in greater details in the following description. More specifically, the inventive method comprises receiving, by an automated entity designated as swarm master, an indication of a mission assigned to a swarm. Master sends a master announcing message, to at least one potential (eligible) slave, reachable directly or indirectly over at least one communication link. Master announcing message includes at least a mission type (for example, "construction" or "mining", encoded as hexadecimal identifier). Once the master announcing message is received by all reachable potential slaves, each slave checks if it has a profile that matches the mission type, the profile including assets and abilities matching the announced mission type. If so, at least one slave with a profile matching the announced mission type sends in return, to the master, a swarm joining message, directly or indirectly over the communication link.

The method further comprises analyzing, by the swarm management module of master, the received messages from all responding slaves to determine the mission plan or the mission configuration based on the assigned mission; and distributing, by communication means of the master, either the mission plan or the mission configuration to all slaves, encoded in swarm management messages. Mission plan and/or mission configuration are defined according to predefined catalogues; the mission configuration specifies a set of entity types and a set of schedules of tasks to be assigned to swarm.

The method further comprises sending by master a set of swarm management messages, wherein swarm management messages comprise key data including swarm identity, swarm entity type, mission type, entity role, behavior policy encoded as a list of rules per event and role, entity trajectories and a set of task schedules to be performed during performance of the mission plan. Slaves regularly send a set of swarm control messages in return, at predefined time intervals or in case of unplanned events. Swarm control messages include status reports of key data including identifiers of the swarm, swarm entity type, mission type, entity role, task, task start time and estimated task end time, task status, estimated time to finish task, communication status, and fuel or energy status.

Each swarm slave propagates swarm management messages, spreading key data across the reachable swarm slaves. Optionally first and second key data are spread on to reachable swarm entities farther on, over various communication protocols.

In some embodiments, each reachable entity that joins the swarm being reached by another swarm slave considers the master of reaching swarm slave as its own master.

Optionally, there is provided an assignment of a deputy master role to at least one swarm entity that has a profile that matches the master profile and is eligible as deputy master. The deputy master monitors the master messaging. In case the designated swarm master is not anymore able to act according to master role requirements, the master role is transferred to the deputy master. Such a transfer is ruled by behavior policy. There is provided an option of announcing a change or a transfer of master role by issuing a new master announcing message which informs the swarm that a new swarm master is replacing the designated master.

Additionally, the method provides temporally synchronizing operations across the master and slaves. Synchronizing means generating and maintaining an event queue that logs status and data and performs a regular health check, the logged status and data including hazard data concerning unplanned events, issues or mishaps.

Throughout swarm, communication is hybrid, employing a client-server and/or a peer-to-peer communication scheme.

In some embodiments, all swarm-related messages have a standardized and extended message format as part of a swarm container. Multiple message sequences are introduced into a message structure called in this description Swam Management Message (SMM), that may be managed by a message broker which may implement various standardized protocols (for example, Constrained Application Protocol CoAP, Message Queuing Telemetry Transfer MQTT, Advanced Message Queuing Protocol AMQP etc.). Swarm management messages are intended to be received by all swarm entities. This may allow multiple eligible swarm members to "listen" the same message, and to give them the freedom to respond to the message only if they have a matching profile (e.g., possess the assets and abilities requested). This approach may provide some degree of resiliency in situations in which one swarm entity is rendered non-functional (e.g., fail to perform). In some embodiments, only relevant swarm entities reply, with the effect that swarm communication is more efficient, but no overall swarm inventory can be performed.

An exemplary embodiment of a swarm management message is a master announcing message, which will be presented in greater detail in the following description.

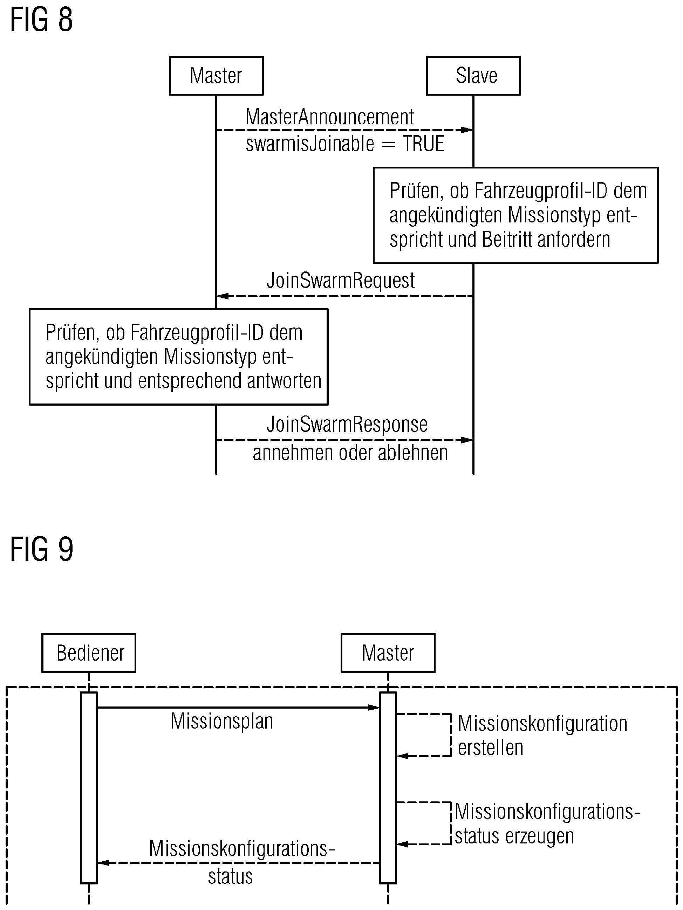

Fig. 8 presents a sequence diagram of a master announcing message, using an exemplary extended Cooperative Awareness Message (CAM) format.

At the start of a mission, the swarm vehicles may be rather co-located or in close proximity (e.g., several hundreds of meters). In this case, swarm announcement by master starts using short-range communication, e.g., at 5.9GHz. By regularly broadcasting their presence, e.g., using Cooperative Awareness Message (CAM, defined by ETSI standard EN 302 637-2: "Specification of Cooperative Awareness Basic Service") or Basic Safety Message (BSM, defined by Society of Automotive Engineers (SAE) J2735 standard), swarm entities in proximity will remain aware of each other. By sending the master announcing message, the master announces its presence and triggers swarm management-related actions, e.g., swarm formation.

One new swarm container is introduced in the CAM for supporting swarm operations. This swarm container shall always be included in the CAM.

Transmission of the master announcing message may be realized using broadcast (including multi-hop) communication (e.g., DSRC, LTE-V2X, NR-V2X) or geo-networking. Remaining Hop Limit (RHL) in geo-networking header shall be set equal to the number of swarm entities. In a worst case, all swarm entities might be linearly separated, and multi-hop communication of messages is required.

Master will receive messages, e.g., "Join Swarm Request", and may estimate their approximate distance using ranging or time difference of arrival measurements. Such messages may be propagated by other swarm entities, in case a transmitting slave and master are not in direct proximity of the currently used radio technology. As long as the message forwarding in a multi-hop manner still works, master may keep using this radio technology. In case an expected transmission from one slave is not received within a predefined time window, the master can either switch to a long-range radio communication channel, e.g., at ultra-high frequency, or instruct the last slave that had the last contact/communication with the slave that failed to respond to the master to use a long-range radio communication channel, e.g., at ultra-high frequency, and retransmit the master's request.

While for the master announcement a standardized or extended structure is used, other messages are newly defined for swarm management purposes. Key data elements, which are important for swarm management, are listed below:
- Swarm identifier,
- Vehicle type, encoded as a vehicle identifier,
- Mission type, encoded as a mission identifier,
- Behavior policy, encoded as list of rules per event, entity role, and entity type,
- Role assignment, encoded as role identifier (wherein role update is possible, included in the message entitled "Join Swarm Response")
- Task schedule,
- Entity trajectory.

An exemplary set of master announcing sequence diagram is specified in the following:

```
 CamParameters ::= SEQUENCE {
      basicContainer BasicContainer,
      highFrequencyContainer HighFrequencyContainer,
      lowFrequencyContainer LowFrequencyContainer OPTIONAL,
      specialVehicleContainer SpecialVehicleContainer OPTIONAL,
       ...
      swarmContainer SwarmContainer OPTIONAL,
       ...
 }
 SwarmContainer ::= SEQUENCE {
 swarmIsJoinable BOOLEAN,
 swarmMissionType INTEGER (assumes pre-defined mission type identifier list or,
 e.g., ENUMERATED {agriculture (0), cargo handling (1), construction (2), material
 supply (3), mining (4), orchard (5), paving (6)} or fine granular ENUMERATED
 {agriculture plowing (0), agriculture seeding (1), agriculture fertilizing (2), agriculture
 harvesting (3)}),
 swarmRoleID ENUMERATED { master (0), slave (1), deputy master (2), N/A (3) },
      swarmID INTEGER (identifier of the swarm to be formed),
      Alternative (optional):
      swarmVehicleProfileIDListLength INTEGER,
 swarmVehicleProfileIDList SwarmVehicleProfileIDList OPTIONAL (list of required
 vehicle profile identifiers INTEGER)
 }
 Slaves with matching vehicle profile identifiers respond to the master with the
 "JoinSwarm Request":
 JoinSwarmRequest ::= SEQUENCE {
      receiver StationID,
      swarmMissionType INTEGER,
      swarmRoleID ENUMERATED { master (0), slave (1), both (2), N/A (3) }
 (slave indicates which roles it can play)
      swarmID INTEGER,
      swarmVehicleProfilelD INTEGER (slave indicates its capabilities)
 JoinSwarmResponse ::= SEQUENCE {
      respondingTo StationID,
      joinSwarmResponseStatus CHOICE {
             notAllowedToJoin NULL,
             allowedToJoin JoinSwarmResponseInfo
 JoinSwarmResponselnfo ::= SEQUENCE {
      key Key,
      frequencyChannel FrequencyChannel,
      swarmID INTEGER,
      swarmMissionType INTEGER,
 swarmRoleID ENUMERATED { master (0), slave (1), deputy master (2), N/A (3) }
 (master indicates slave's role)
 }
 SMM: = SEQUENCE {
      header ItsPduHeader,
      station Type StationType,
      referencePosition ReferencePosition,
      heading Heading,
      generation Delta Time Generation Delta Time,
      message CHOICE {
             joinSwarmRequest JoinSwarmRequest,
             joinSwarmResponse JoinSwarmResponse,
             leaveSwarmRequest LeaveSwarmRequest
```

Additionally, Swarm Control Messages (SCM) are communicated among swarm entities. Each slave regularly transmits its status report to master, e.g., at predefined time intervals or in case of unplanned events (e.g., emergency braking). These status reports could be considered as the swarm system's "heartbeat". The master shall receive all status reports of each slave. A slave broadcasts a status report including a task identifier. This task identifier is used within sub-teams to be aware of the work progress of each sub-team entity. A status report transmitted by a slave may need to be forwarded by other swarm entities, if the master cannot directly be reached by a slave. Thus, status reports are propagated through the swarm network in a multi-hop manner.

An exemplary status report may comprise the following key data:
- Swarm identifier,
- Entity identifier,
- Mission type, encoded as a mission identifier,
- Role identifier,
- Task identifier (along with a filter option for relevant receivers),
- Task start time, estimated task end time,
- Task start location, task end location,
- Task identifier status (e.g., progress of specific work task),
- Estimated time to finish task,
- Communication status: used radio access technology (RAT) identifier, time and status of last communication,
- Fuel or energy status,
- Leave (manual, event).

Fig. 9 illustrates a sequence diagram of communication between an operator and a master, concerning mission planning.

At start of mission planning, the operator may have the opportunity to create itself the mission plan and to provide it either via the human-machine interface to master or via a backend system to the swarm system. If the master is not able to connect to a backend system, the master may use the mission plan provided by the operator to automatically generate a mission configuration. For example, the operator can provide the mission plan via the master's interface either on the work site or at his home base.

Through mission configuration data and status, the operator and the master cooperate to ensure that a feasible mission configuration is created for each mission according to the mission plan received from operator.

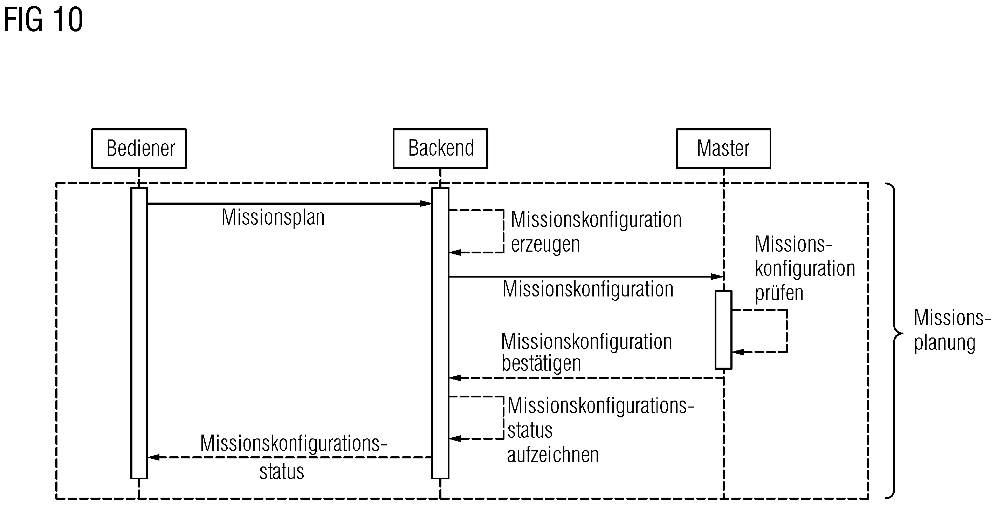

Fig. 10 presents a sequence diagram of communication between operator, backend and master, concerning mission planning.

At start of mission planning, the operator creates the mission plan. If the master is able to connect to a backend system, the backend system may be able to pre-generate automatically a mission configuration and provide it to the master.

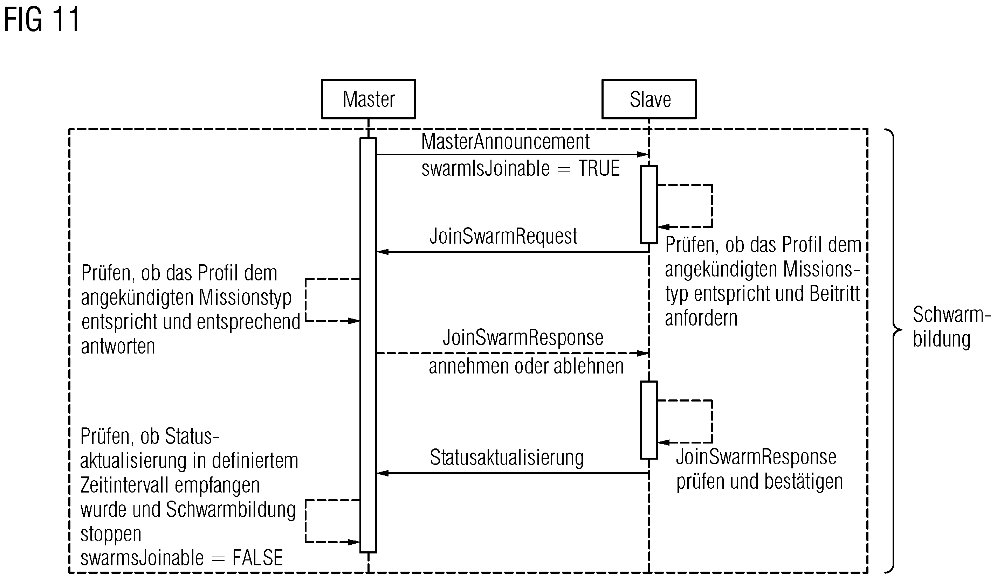

Fig. 11 shows a sequence diagram of communication between master and slave during swarm formation, as detailed in the afore-mentioned description. Swarm formation provides also a mechanism for master to pro-actively identifying situations in which the disengaging of a swarm entity and/or the cessation of the performance of its tasks may compromise the mission completion, and to invite another swarm entity by which a task or other operation was being successfully executed to replace the disengaging or underperforming swarm entity.

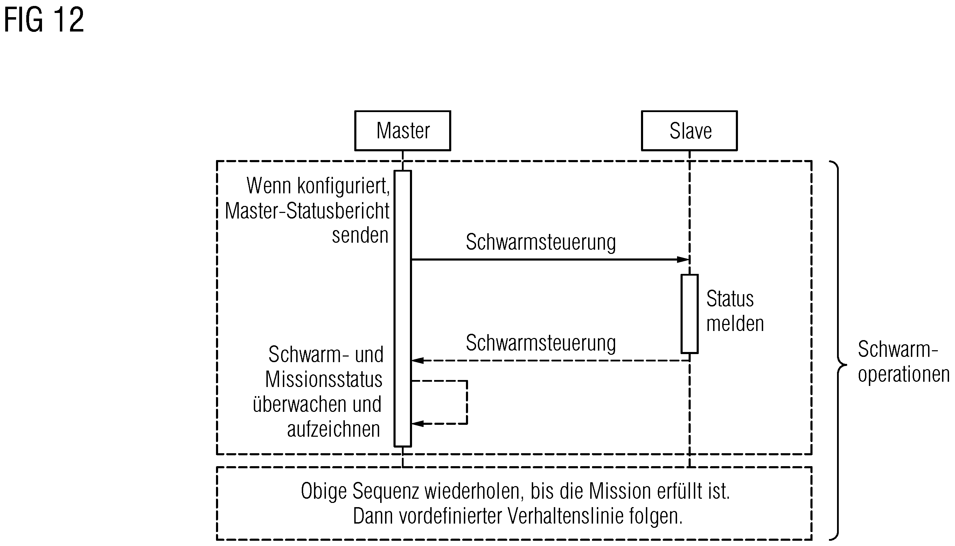

Fig. 12 presents a sequence diagram of communication between master and slave concerning swarm operations.

As tasks are successfully executed according to the schedule, the master's swarm operations manager coordinating the performance of mission receives status reports indicative of those successful completions from slaves through a mission status report. Upon successful completion of the last of the tasks of a task schedule, the master transmits a message conveying an indication of completion of the mission to the backend to be relayed onward to operator.

Where reports are received from each slave swarm operations manager that are consistent with ongoing successful execution of tasks such that there are no messages received that indicate excessive execution time, and/or the occurrence of cessation of the task, the master's swarm operations manager may take no action concerning the performing of those task. However, in response to one or more reports being received at the master swarm operations module that are consistent with non-compliant behavior by the slave during the execution of a task, and/or failure of execution of the task, the master's swarm operations module may transmit one or more messages to trigger the cessation of the schedule in which the task is being executed. In doing so, the master's swarm operations module may also trigger the cessation of the mission plan for which the task schedule was being executed.

It may be that, during performance of the mission, if one of those slaves unexpectedly crashes, leaves the swarm and/or suffers some other mishap or issue, the swarm operations manager of the master may be informed of such an event as a result of ceasing to receive a status report from that swarm entity within a predetermined period of time. In response, the master's swarm operation manager may cause the performance of that task to be re-commenced within another task, by the same swarm entity or by another swarm entity of the same type.

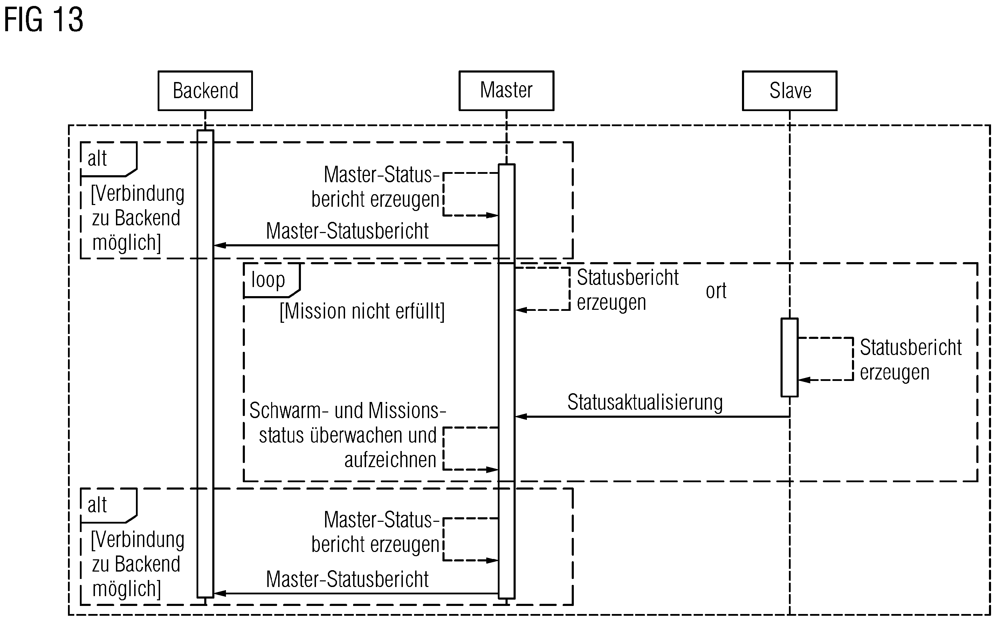

Fig. 13 illustrates a sequence diagram of communication between backend, master and slave concerning swarm operations, where mission status reports are created and exchanged.

Through master status reports, the backend and the master may cooperate to monitor the communication of master and provide a master status report; separately, they may cooperate to monitor and record swarm and mission status. Further on, the master and the slaves may cooperate to exchange status information concerning tasks performance to ensure the completion thereof in spite of issues or other mishaps of swarm entities.

More specifically, upon receiving a report status that commands uninstantiation of a task, the master's swarm operations manager may transmit an indication to the mission planning manager, via a swarm control message, that attempts at executing the task schedule were unsuccessful. In response, the mission planning manager may effectuate the cessation of any further performance of any of the tasks of the mission plan that included the execution of that task and may transmit an indication to the backend via the mission status report that the performance of the mission have ended with errors. The backend may, in turn, relay such an indication onward to the operator. As will also be explained in greater detail, such an indication may trigger an operator to command the mission planning manager to generate a new mission plan replacing the initial one.

Moreover, a fallback mechanism is provided. If an initial master is broken down, a pre-designated deputy master vehicle, which was assigned by the initial master during swarm formation, has to assume the master role, potentially adapt the mission configuration, and announce the swarm entities about the change of swarm setup. If no swarm entity is able to assume the master role, the mission may need to be aborted. If the master entity is able to connect to the backend, it may request help from the remote operator who should re-configure the swarm and its mission configuration. A similar fallback mechanism is provided not only for master in transferring its role to another swarm entity, but also to a swarm slave unable to perform its tasks due to various causes.

As swarm entities may not necessarily be in direct communication range with respect to each other during the performance of the assigned mission, if the underlying radio technology is limited in communication range, it must be capable of forwarding and relaying messages in a multi-hop manner to the corresponding recipient. For example, if one swarm slave wants to report its status to the master, only neighboring swarm entities in communication range of the transmitting swarm slave are able to receive the message and to forward this message to the final destination, potentially across multiple swarm entities, and thus communication hops. In order to facilitate swarm formation, the first key data of the swarm concept (e.g., mission type, swarm identifier, vehicle profile identifier) need to be translated into CoAP resources and terminology. For example, the swarm will be handled as a "group" and each swarm entity as an "endpoint".

However, as the swarm entities are supposed to act as both servers and clients, extensions of the CoAP protocol can be used to implement a publish /subscribe communication model, which appears to be "broker-less" and more efficient compared to MQTT. For example, the publish-subscribe communication model enables to send push notifications when an event occurs, instead of constantly polling a resource. This allows to decrease the power consumption as well as the messages on the swarm. In contrast to MQTT, no central broker entity is needed, and communication can be performed in an asynchronous manner. For example, swarm entities may publish their status reports without having received an explicit request.

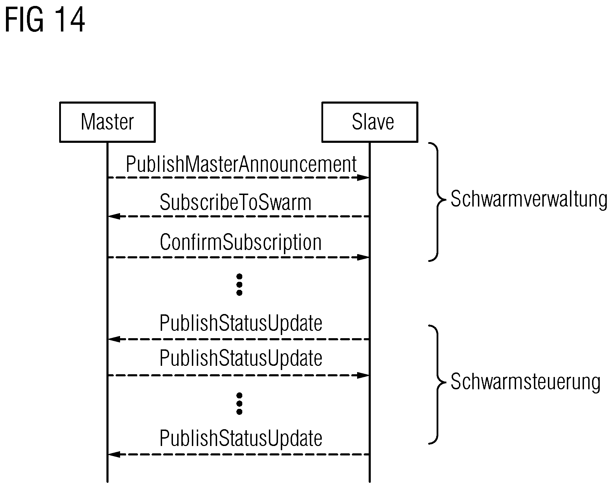

Fig. 14 shows a sequence diagram of a master announcing message, using a CoAP format.

First, the master may act as a broker. The master may publish its master announcement using IP multicast. Slaves that are not in direct communication range of the master may receive this message via multi-hop communication, messages are forwarded by intermediate nodes.

The envisioned communication scheme is a hybrid one. Depending on the swarms' operational context (e.g., plain field vs. open pit mine), the communication technology, mode, or channels may be changed. Further, high-altitude platforms or drones could be envisioned to support the localization of swarm nodes and directly communicate (i.e., act as a relay or Integrated Access and Backhaul (IAB) node in 3GPP terms) and instruct other swarm entities where to move for swarm formation.

Another aspect of invention is providing a computer-implemented program comprising at least one program module that directs a master computing system to function in a specified manner to manage a swarm and perform a mission assigned to the swarm. The mentioned program module includes instructions of receiving an indication of a mission assigned to the swarm and sending a master announcing message to at least one potential slave reachable directly or indirectly over at least one communication link, the master announcing message including a mission type. Further on, there are provided instructions of receiving swarm joining messages from at least one responding slave that has a profile matching the announced mission type, directly or indirectly over the communication link, analyzing the received messages from all responding slaves to determine a mission plan or a mission configuration based on the assigned mission, distributing either the mission plan or the mission configuration to the responding slaves, and regularly collecting from slaves reports on status of performance of mission.

Additionally, the invention provides a computer implemented program comprising at least one program module that directs a slave computing system to function in a specified manner to join a swarm and perform a task scheduled according to a mission assigned to swarm. The mentioned program module includes instructions of receiving, by the slave computing system, a master announcing message including a mission type, checking if slave profile matches the mission type, the slave profile including computing resources and abilities matching the announced mission type; sending in return, to the master, at least one swarm joining message, when the slave profile matches the announced mission type,
joining in the performance of the task; and regularly sending to master reports on status of the performance of the scheduled task.

Additional potential use cases for the invention are listed in the following: agricultural machinery / robots, whereby various vehicle platforms used for different use cases (e.g., seeding, weeding, crop detection), or tractor plus various implements (e.g., sprayer, mower) to be operated in an orchard; autonomous operation of mining trucks (from the "ground" to the "surface"); construction/road works, wherein paving is done by an operator driving the paver, but compacting is done by a swarm of rollers; cargo handling: container handling in confined areas with reach stackers and autonomous Automated Guided Vehicles (aAGVs); cargo and baggage handling in confined areas, e.g. airports, harbors; supply of production facility via autonomous Automated Guided Vehicles.

However, while certain embodiments of the present invention have been described in detail, those familiar with the art to which this invention relates will recognize various alternative designs and embodiments for practicing the invention as defined by the following claims.

### List of reference numbers

aAGV - autonomous Automated Guided Vehicle
MV- Master Vehicle
SV - Slave Vehicle
1 - Swarm system
11 -Swarm Master system
12 - Mission planning manager
120 - Swarm formation manager
1001 - Master's Swarm Management module
1002 - Slave's Swarm Management module
200 - Swarm operations module
210 - Swarm operations and task execution manager
2201 - Status collection and monitoring manager of swarm master
2202 - Status collection and reporting manager of swarm slave
300 - Motion module
400 - Perception module
500 - Communication module
600 - Localization module
700 - Other vehicles/road users
800 - Backend
900 - Human-Machine Interface

### Bibliographic references

### Non-Patent Literature

[1] "A Comparative Study of Wireless Protocols: Bluetooth, UWB, ZigBee, and Wi-Fi", authors Karunakar Pothuganti and Anusha Chitneni, published in Advance in Electronic and Electric Engineering, ISSN 2231-1297, Volume 4, Number 6 (2014), pp. 655-662
[2] "Wireless sensor networks: A survey on the state of the art and the 802.15.4 and ZigBee standards", authors Paolo Baronti, Prashant Pillai, Vince W.C.Chook, Stefano Chess, AlbertoGotta, Y. FunHua, published in Computer Communications, Volume 30, Issue 7, 26 May 2007, Pages 1655-1695
[3] "Evaluation of wireless short-range communication performance in a quarry environment", authors Susanne Vernersson; Eleni Kalpaxidou; David Rylander, published in 2013 International Conference on Connected Vehicles and Expo (ICCVE), DOI: 10.1109/ICCVE.2013.6799812
[4] "Energy savings by wireless control of speed, scheduling and travel times for hauling operation", authors David Rylander, Jakob Axelsson, Peter Wallin, published in 2014 IEEE Intelligent Vehicles Symposium (IV), DOI: 10.1109/IVS.2014.6856451
[5] "Artificial Intelligence Supervised Swarm UAVs for Reconnaissance", authors Saatvik Awasthi, Balamurugan Balamurugan, V. Porkodi, published in May 2020 in the book "Data Science and Analytics", DOI: 10.1007/978-981-15-5827-6_33
[6] "Flying ad-hoc networks (FANETs): A review of communication architectures, and routing protocols", authors Muhammad Asghar Khan, Alamgir Safi, Ijaz Mansoor Qureshi, Inam Ullah Khan, published in 2017 First International Conference on Latest trends in Electrical Engineering and Computing Technologies (INTELLECT), DOI: 10.1109/INTELLECT.2017.8277614
[7] ENSEMBLE project presentation "Intelligent Maneuver Automation - cooperative hazard avoidance in realtime (IMAGinE)", author Lehmann B., 9th ETSI IST Workshop, March 6-8, 2018, Berlin
[8] ENSEMBLE project publication "Specifications for multi-brand truck platooning", authors Edoardo Mascalchia, Alessandro Coda, Dehlia Willemsen, published in Proceedings of 8th Transport Research Arena TRA 2020, April 27-30, 2020, Helsinki, Finland

### Patent Literature

US2013123981A1
US2013128726A1
US2014080527A1
US2017093697A1
US2018097647A1
US2020322895A1
US2016381596A1
US2018167452A1
US2019049931A1
US6636781

## Claims

1. Method for coordination and management of a swarm of automated entities, wherein the swarm comprises at least a designated master and a slave,
receiving, by the designated master, an indication of a mission assigned to the swarm,
sending, by the designated master, a master announcing message, to at least one potential slave, reachable directly or indirectly over at least one communication link, the master announcing message including a mission type,
receiving, by all reachable potential slaves, the master announcing message to check if at least one potential slave has a profile that matches the mission type, the profile including assets and abilities matching the announced mission type, sending in return, to the master, at least one swarm joining message, by at least one of the slaves that has a profile matching the announced mission type, directly or indirectly over the communication link **characterized in that** the method comprises:
further includes temporally synchronizing operations across the master and slaves, the synchronizing including generating and maintaining an event queue that logs status and data and performs a regular health check, the logged status and data including hazard data concerning unplanned events, issues or mishaps.

2. Method according to claim 1, **characterized in that** all swarm-related messages have a standardized and extended message format as part of a swarm container.

3. Method according to claim 1, **characterized in that** the method further comprises analyzing, by a swarm management module of the master, the received messages from all responding slaves to determine the mission plan or the mission configuration based on the assigned mission; and
distributing, by communication means of the master, either the mission plan or the mission configuration to all slaves, encoded in swarm management messages.

4. Method according to claims 1, 2 and 3, **characterized in that** the mission plan and/or mission configuration are defined according to predefined catalogues, and the mission configuration specifies a set of entity types and a set of schedules of tasks to be assigned to swarm entities.

5. Method according to claim 1, **characterized in that** the method further comprises regularly sending by slaves and receiving by master a set of status report messages, at pre-defined time intervals or in case of unplanned events, wherein status report messages include a first set of key data, namely identifiers of the swarm, swarm entity type, mission type, entity role, task, task start time and estimated task end time, task status, estimated time to finish task, communication status, and fuel or energy status.

6. Method according to claim 1, **characterized in that** the method further comprises sending by master a set of swarm management messages, wherein swarm management messages comprise a second set of key data including identifiers of the swarm, swarm entity type, mission type, entity role, behavior policy encoded as a list of rules per event and role, entity trajectories and a set of task schedules to be performed during performance of the mission plan.

7. Method according to claim 1, **characterized in that** the method further comprises that each swarm slave propagates swarm management messages, spreading the second key data across the reachable swarm slaves, and optionally together with the first key data on the reachable swarm entities farther, over various communication protocols.

8. Method according to claim 1, **characterized in that** the method further comprises that each reachable entity that joins the swarm being reached by another swarm slave considers the master of reaching swarm slave as its own master.

9. Method according to claim 1, **characterized in that** the method further comprises the option of assignment of a deputy master role to at least one swarm entity that has a profile that matches the master profile and is eligible as deputy master.

10. Method according to claim 9, **characterized in that** the method further comprises monitoring, by the deputy master, the master messaging.

11. Method according to claims 1, 9 and 10, **characterized in that** the method further comprises the transfer of master role to the deputy master, in case the current swarm master is not able to act according to master role requirements, wherein the master role transfer is ruled by the behavior policy.

12. Method according to claims 1 and 11, **characterized in that** the method comprises the option of announcing a change or a transfer of master role by issuing a new master announcing message which informs the swarm that a new swarm master is replacing the current master.

13. Method according to claim 1, **characterized in that** the communication is hybrid, employing a client-server and/or a peer-to-peer communication scheme.

14. A swarm master apparatus comprising an automated driving module, a motion module and a perception module, at least one processor coupled with at least one memory and adapted to execute a routine that includes instructions for managing a swarm and performing a mission assigned to swarm, and hardware means necessary for performance of the mission, such means comprising a swarm management middleware; and means for communicating with other swarm entities and with entities outside swarm, such means comprising a communication management middleware.

15. A swarm slave apparatus comprising an automated driving module, a motion module and a perception module, at least one processor coupled with at least one memory and adapted to execute a routine that includes instructions for joining a swarm at the request of a swarm master and performing a task scheduled on a mission configuration, and hardware means necessary for performance of the task; and means for communicating with swarm master, other swarm slaves and with entities outside swarm, such means comprising a communication management middleware.

16. A computer-implemented program comprising at least one program module that directs a master computing system to function in a specified manner to manage a swarm and perform a mission assigned to the swarm, the program module including instructions for:
receiving an indication of a mission assigned to the swarm,
sending a master announcing message, to at least one potential slave reachable directly or indirectly over at least one communication link, the master announcing message including a mission type,
receiving swarm joining messages from at least one responding slave that has a profile matching the announced mission type, directly or indirectly over the communication link,
analyzing the received messages from all responding slaves to determine a mission plan or a mission configuration based on the assigned mission,
distributing either the mission plan or the mission configuration to the responding slaves, and
regularly collecting from slaves reports on status of performance of mission.

17. A computer-implemented program comprising at least one program module that directs a slave computing system to function in a specified manner to join a swarm and perform a task scheduled according to a mission assigned to swarm, the program module including instructions for:
receiving, by the slave computing system, a master announcing message including a mission type,
checking if slave profile matches the mission type, the slave profile including computing resources and abilities matching the announced mission type,
sending in return, to the master, at least one swarm joining message, when the slave profile matches the announced mission type,
joining in the performance of the task, and
regularly sending to master reports on status of the performance of the scheduled task.
